# NEUE EUROPÄISCHE PATENTSCHRIFT

(11) **EP 2 173 623 B2**
(45) Veröffentlichungstag und Bekanntmachung des Hinweises auf die Entscheidung über den Einspruch: **15.09.2021**
(45) Hinweis auf die Patenterteilung: 19.12.2012
(21) Anmeldenummer: 08786163.9
(22) Anmeldetag: 16.07.2008
(51) Int. Cl.: B65D 1/02, B29B 11/14, B29C 49/42

(54) **KUNSTSTOFFBEHÄLTNIS MIT EINGRIFFSNUT**
PLASTIC CONTAINER HAVING GRIPPING GROOVE
RÉCIPIENT EN PLASTIQUE AVEC RAINURE D'ENGAGEMENT

(30) Priorität: 17.07.2007 DE 102007033621
(43) Veröffentlichungstag der Anmeldung: 14.04.2010
(73) Patentinhaber: Krones AG, 93073 Neutraubling (DE)
(72) Erfinder: FORSTHÖVEL, Jochen, 93059 Regensburg (DE); STOIBER, Christian, 93185 Michelsneukirchen (DE)
(74) Vertreter: Grünecker Patent- und Rechtsanwälte PartG mbB
(86) Internationale Anmeldenummer: PCT/EP2008/059264
(87) Internationale Veröffentlichungsnummer: WO 2009/010520

(56) Entgegenhaltungen:
- EP-B1- 1 796 979
- WO-A-02/090220
- WO-A1-02/090220
- AT-U1- 5 071
- DE-A-102005 012 020
- DE-A1- 19 924 287
- DE-A1- 19 924 827
- DE-A1-102005 051 735
- DE-A1-102005 051 735
- DE-A1-102006 012 020
- FR-A- 2 791 337
- FR-A1- 2 791 337
- US-A- 4 473 163
- US-A- 4 818 212
- US-A- 4 818 212
- US-A1- 2002 134 747
- US-A1- 2003 098 286
- US-A1- 2004 045 925
- US-A1- 2005 087 508
- US-B1- 6 325 227

## Beschreibung

Die vorliegende Erfindung bezieht sich auf ein Kunststoffbehältnis und insbesondere ein Kunststoffbehältnis zur Aufbewahrung von Getränken. In jüngerer Zeit haben sich auf dem Markt Kunststoffflaschen, wie beispielsweise PET-Flaschen, immer mehr gegenüber Glasflaschen durchgesetzt. Bei der Herstellung dieser Flaschen werden sogenannte Preforms erwärmt und innerhalb einer Form, beispielsweise mit Luftdruck, expandiert.

Um die einzelnen Behältnisse bzw. Preforms behandeln zu können, weisen diese im Stand der Technik einen meist umlaufenden Kragen auf Siche Z.B. DE 19924827 und DE 102005051735. Dieser Kragen wird verwendet, um das Behältnis beispielsweise mit einem Greifarm greifen und an einen weiteren Greifarm weitergeben zu können. Allgemein wird damit dieser im Folgenden auch als Tragring bezeichnete Kragen zum Handling der Flasche verwendet. In der Regel wird dabei von einer Klammer, welche das Behältnis greift, zur nächsten gewechselt, wobei eine Klammer unterhalb dieses Tragrings greift und eine Klammer oberhalb dieses Tragrings zwischen dem Tragring und einem meist oberhalb des Tragrings angeordneten Sicherungsring. Dieser Sicherungsring ist dabei gegenüber dem Tragring wesentlich kleiner und auch materialsparender ausgebildet.

Damit dient dieser Tragring, der üblicherweise auch noch bei dem fertigen Produkt sichtbar ist, ausschließlich dem Herstellungsprozeß der Behältnisse / des Produkts. Andererseits benötigt dieser Tragring auch eine erhebliche Menge an Kunststoffmaterial. Dabei ist zu beachten, dass ein Vorformling in demjenigen Bereich, in dem dieser Tragring angeordnet ist, unverstreckt bleibt und damit eine große Menge an Material in dem Tragring verbleibt. Der vorliegenden Erfindung liegt daher die Aufgabe zugrunde, ein Behältnis zur Verfügung zu stellen, welches eine höhere Materialeinsparung erlaubt und insbesondere ein Behältnis zur Verfügung zu stellen, welches auf den erwähnten Tragring verzichtet.

Gleichzeitig soll jedoch auch verhindert werden, dass zum Herstellen dieser Behältnisse eine Klammer direkt in das Gewinde der Behältnisse eingreift, da dieses ansonsten zerstört werden könnte bzw. ein korrekter Sitz der Greifklammern nicht gewährleistet werden könnte.

Dies wird erfindungsgemäß durch ein Behältnis nach Anspruch 1 und ein Verfahren nach Anspruch 11 erreicht. Vorteilhafte Ausführungsformen und Weiterbildungen sind Gegenstand der Unteransprüche.

Ein erfindungsgemäßes Behältnis weist einen Grundkörper und ein Außengewinde auf. Weiterhin ist ein wenigstens abschnittsweise umlaufender Sicherungsring vorgesehen, der sich bezüglich des Grundkörpers des Behältnisses nach außen erstreckt, wobei der wenigstens abschnittsweise umlaufende Sicherungsring in einer Längsrichtung des Behältnisses zwischen dem Außengewinde und dem Grundkörper angeordnet und in der Längsrichtung des Behältnisses von dem Außengewinde beabstandet ist. Erfindungsgemäß weist das Behältnis zwischen dem Grundkörper und dem umlaufenden Sicherungsring eine wenigstens abschnittsweise umlaufende Nut auf, wobei diese Nut einen geringeren Außenquerschnitt als der Sicherungsring und einen geringen Außenquerschnitt als ein Außengewindekenn aufweist. Der Sicherungsring erstreckt sich bevorzugt im Wesentlichen radial nach außen. Es wäre jedoch auch möglich, dass der Ring schräg bezüglich der radialen Richtung angeordnet ist.

Bei dem Behältnis handelt es sich beispielsweise um einen Preform bzw. Vorformling, der zu einem Kunststoffbehältnis expandiert werden kann. Der Sicherungsring dient vorzugsweise gleichzeitig auch dazu, um bei einem Öffnen der Flasche eine Versiegelung des Flaschenverschlusses zu öffnen.

Bei der erfindungsgemäßen Ausführungsform ist damit die Nut sowohl gegenüber dem Gewinde als auch gegenüber dem Sicherungsring als Nut ausgebildet, das heißt die Nut weist einen Außenumfang auf, der geringer ist als alle Bereiche des Gewindes also sowohl des Gewindegangs als auch eines Gewindekerns, auf dem dieser Gewindegang angebracht ist.

Durch das Vorsehen dieser Nut ist es möglich, dass mit einem speziell angepassten Eingriffsmittel in diese Nut eingegriffen wird, um das Behältnis zu transportieren oder allgemein zu behandeln und dass durch diesen Eingriff das Gewinde selbst nicht beschädigt wird. Genauer ist es bevorzugt möglich, dass ein Eingriffsmittel von unten her dem Gewindekern anliegt und damit der Gewindegang selbst nicht berührt wird.

Die erfindungsgemäße Aufgabe wird ebenfalls dadurch erreicht, dass erfindungsgemäß unterhalb des Gewindes neben dem Sicherungsring kein weiterer radial nach außen weisender Kragen vorgesehen ist.

Insbesondere kann bei beiden erfindungsgemäßen Varianten aufgabengemäß auf den Tragring verzichtet werden.

Damit ist das erfindungsgemäße Behältnis derart ausgestaltet, dass es von unterschiedlichen Greifeinrichtungen auf unterschiedlichen Höhen in Längsrichtung des Behältnisses gegriffen werden kann, ohne dass dabei das Gewinde selbst berührt bzw. beschädigt wird. Damit wird ebenfalls, wie im Stand der Technik, eine Greifeinrichtung unterhalb des Sicherungsrings eingreifen. Eine Beschädigung des Gewindes wird jedoch vermieden. Auch wird durch die Nut erreicht, dass das Behältnis auf einer genau definierten Höhe gegriffen wird. Würde hingegen ein Eingriff in das Gewinde erfolgen, wäre der genaue Höhenabschnitt des Bereiches, in den eingegriffen wird, undefiniert, da er auch von der Winkellage des Preforms bzw. der Flasche abhängen würde, weil hierbei auch die Gewindegänge bzw. deren Endabschnitte eine Rolle spielen würden. Damit wäre die Lage des Behältnisses bzw. des Preforms undefiniert, da diese von der Drehstellung des Behältnisses um die Längsachse abhängig wäre.

Bei einer weiteren vorteilhaften Ausführungsform könnte auch ein zusätzlicher Ring vorgesehen sein, der im verschlossenen Zustand des Behältnisses unter einem Flaschenverschluß verschwindet. Eine entsprechende Greifklammer könnte dabei zwischen diesem zusätzlichen Ring und dem Sicherungsring eingreifen und die Nut würde zwischen diesen beiden Ringen gebildet werden. Auf diese Weise würde jedoch möglicherweise derjenige Bereich beeinträchtigt werden, der für die Funktion des Verschlußsystems verantwortlich ist.

Damit liegt der Erfindung die grundsätzliche Idee zugrunde, dass keine zusätzlichen Geometrien in dem verschlußsensiblen Bereich eingebaut werden, das heißt Ringe, die nach außen ragen, sondern dass eine bezüglich des Behältnisses radial nach innen weisende Nut vorgesehen wird.

Bei einer weiteren bevorzugten Ausführungsform schließt sich die wenigstens teilweise und bevorzugt vollständig umlaufende Nut in der Längsrichtung des Behältnisses unmittelbar an den umlaufenden Sicherungsring an. Bei dieser Ausführungsform ist eine Seitenfläche dieses Sicherungsrings gleichzeitig eine Begrenzungswand der Nut. Auf diese Weise können die Dimensionen des gesamten Behältnisses verkürzt werden.

Bei einer weiteren vorteilhaften Ausführungsform weist die Nut wenigstens abschnittsweise geradlinig verlaufende Begrenzungswände auf. Durch diese Ausführungsform ist ein sehr präziser Eingriff eines Eingriffsmittels in diese Nut und damit ein sehr stabiler Halt des Behältnisses in den Greifeinrichtungen möglich.

Bei einer weiteren vorteilhaften Ausführungsform weichen die Höhe der Nut in der Längsrichtung des Behältnisses und die Länge des umlaufenden Sicherungsrings in der Längsrichtung des Behältnisses um nicht mehr als 100 %, bevorzugt um nicht mehr als 50 %, bevorzugt um nicht mehr als 25 % und besonders bevorzugt um nicht mehr als 10 % voneinander ab. Damit sind die Nut und der Sicherungsring hinsichtlich ihrer jeweiligen Ausdehnung in der Längsrichtung des Behältnisses im Wesentlichen gleich groß dimensioniert. Dies ist insoweit vorteilhaft, als auch die Greifwerkzeuge mit entsprechend einheitlichen Größen bzw. Formelementen ausgeführt werden können.

Bei einer weiteren vorteilhaften Ausführungsform weist der umlaufende Sicherungsring einen sich geradlinig nach außen erstreckenden Abschnitt und einen sich an diesem Abschnitt anschließenden schräg in der Längsrichtung des Behältnisses nach unten verlaufenden Abschnitt auf. Auf diese Weise ist eine weitere Materialeinsparung möglich. Durch diese Schräge entsteht ein Zentriereffekt beim Eingreifen der Greifwerkzeuge in die Nut.

Bei einer weiteren vorteilhaften Ausführungsform weichen die Länge des ersten Abschnitts und die Tiefe der Nut um nicht mehr als 50 %, bevorzugt um nicht mehr als 25 %, bevorzugt um nicht mehr als 10 % und besonders bevorzugt um nicht mehr als 5 % voneinander ab. Vorzugsweise stimmen diese beiden Größen miteinander überein. Auch durch diese Vorgehensweise können besonders vorteilhaft standardisierte Werkzeuge zum Transport des Behältnisses eingesetzt werden.

Das Behältnis ist aus einem Kunststoff und besonders bevorzugt aus PET hergestellt.

Bevorzugt weist der Grundkörper einen sich in der Längsrichtung des Behältnisses in Richtung des umlaufenden Sicherungsrings wenigstens abschnittsweise erweiternden Querschnitt auf.

Die Innenwandung des Behältnisses weist oberhalb des umlaufenden Sicherungsrings einen sich in Richtung des Außengewindes konisch erweiternden Abschnitt auf. Da auch die beschriebene Nut nach innen gerichtet ist, ist an dieser Stelle auch der Innendurchmesser des Preforms verringert, damit genügend Wanddicke für einen Spritzgußprozeß zur Verfügung steht und auch die Stabilität des Mundstücks erhalten bleibt. Der Innendurchmesser des Behältnisses verringert sich, wie oben erwähnt, auf der Höhe des Sicherungsrings, was aufgrund der Verschließproblematik bzw. des Untergreifens des Sicherungsbandes mit den Verschließerkrallen des Verschlusses vorteilhaft ist.

Der sich in vorteilhafter Weise ergebende Absatz innerhalb des Mundstückes kann beispielsweise zum Abdichten der Blasdüse während des Blasvorgangs vorteilhaft genutzt werden. Alternativ ist jedoch beispielsweise für einen Blasvorgang auch eine Abdichtung auf dem Mündungsrand möglich. Eine Doppelabdichtung auf dem Mündungsrand und auf dem angegebenen Absatz ist auch denkbar.

Bei einer weiteren vorteilhaften Ausführungsform handelt es sich bei dem Behältnis um ein expandierbares Behältnis und insbesondere einen Vorformling.

Die vorliegende Erfindung ist weiterhin auf ein Verfahren zum Transportieren eines Behältnisses der oben beschriebenen Art gerichtet, wobei das Behältnis durch eine erste Greifeinrichtung unterhalb des Sicherungsrings gegriffen wird und von einer zweiten Greifeinrichtung wenigstens teilweise an bzw. in der umlaufenden Nut gegriffen wird. Damit ist es durch das erfindungsgemäße Verfahren möglich, die Behältnisse innerhalb eines Zweistufenverfahrens zu transportieren, das heißt von einer Klammer (Greifeinrichtung) an eine weitere zu übergeben und gleichzeitig auf den im Stand der Technik üblichen Tragring zu verzichten, wobei gleichwohl eine Beschädigung des Behältnisses bzw. des Gewindes durch die einzelnen Klammern vermieden wird.

Weiterhin offenbart wird eine Vorrichtung zum Transportieren von Behältnissen der oben beschriebenen Art. Diese Vorrichtung weist wenigstens eine erste Greifeinrichtung auf, welche die Behältnisse an einem ersten vorgegebenen Bereich der Behältnisse greift sowie wenigstens eine zweite Greifeinrichtung, welche die Behältnisse an einem zweiten von dem ersten Bereich verschiedenen Bereich der Behältnisse greift. Die erste Greifeinrichtung ist derart gestaltet, dass sie das Behältnis unterhalb des Sicherungsrings greift und die zweite Greifeinrichtung ist derart gestaltet, dass sie das Behältnis oberhalb des Sicherungsrings und wenigstens auch in der Nut des Behältnisses greift.

Weiterhin offenbart wird eine Anordnung von Behältnissen mit einer Vorrichtung der oben beschriebenen Art.

Weitere Vorteile und Ausführungsformen ergeben sich aus den beigefügten Zeichnungen:

Darin zeigen:
- Fig. 1a: ein Behältnis nach dem Stand der Technik;
- Fig. 1b: eine Querschnittsansicht des Behältnisses aus Fig. 1a;
- Fig. 2a: eine perspektivische Ansicht eines erfindungsgemäßen Behältnisses;
- Fig. 2b: eine Draufsicht auf das Verhältnis aus Fig. 2a;
- Fig. 2c: eine Querschnittsansicht des Behältnisses aus Fig. 2a; und
- Fig. 2d: eine vergrößerte Ansicht eines Kopfbereiches des Behältnisses aus Fig. 2c.

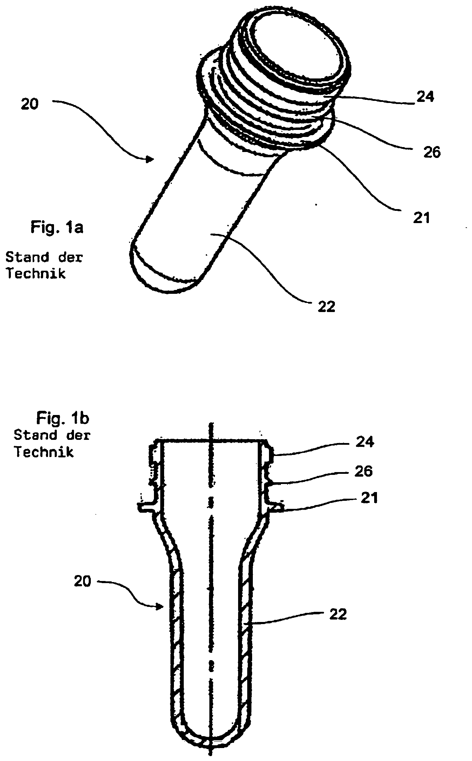

Fig. 1a zeigt eine perspektivische Ansicht eines Behältnisses 20 nach dem Stand der Technik. Dieses Behältnis 20 weist einen Grundkörper 22 und ein Gewinde 24 auf. Zwischen diesem Gewinde 24 und dem Grundkörper 22 sind ein Tragring 21 und ein Sicherungsring 26 vorgesehen. Dieses Behältnis 20 wird im Laufe des Herstellungsverfahrens zu einer Kunststoffflasche expandiert, wobei jedoch die Gestalt einschließlich des Tragrings 21 und oberhalb des Tragrings 21 bei dem Expansionsvorgang beibehalten bleibt. Man erkennt, dass der Tragring 21 erheblich radial nach außen ragt und damit eine große Menge an Material für diesen Tragring erforderlich ist.

Fig. 1b zeigt eine Querschnittsansicht des in Fig. 1a gezeigten Behältnisses 20. Da dieses Behältnis in einem zweistufigen Verfahren mit mehreren Greifklammern befördert wird, ist es möglich, dass eine bestimmte Greifklammer unterhalb des Tragrings 21 eingreift und eine weitere Greifklammer zwischen dem unteren Tragring 21 und dem Sicherungsring 26. Auf diese Weise kann ein Eingriff in das Gewinde 24 vermieden und dieses damit geschont werden.

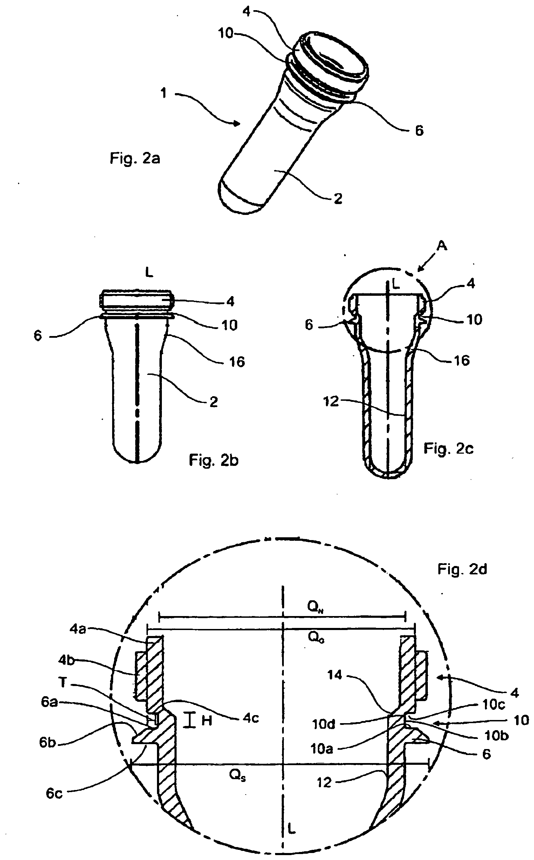

Fig. 2a zeigt eine perspektivische Ansicht eines erfindungsgemäßen Behältnisses 1. Dieses Behältnis 1 weist ebenfalls einen expandierbaren Grundkörper 2 sowie ein (nicht im Detail gezeigtes) Gewinde 4 auf. Zwischen dem Gewinde 4 ist jedoch erfindungsgemäß neben dem Sicherungsring 6 eine Nut 10 vorgesehen, die als Hilfsmittel für eine Greifeinrichtung dient. Damit ist es möglich, bei der erfindungsgemäßen Ausführungsform auf das Vorsehen eines Tragrings, wie im Stand der Technik, zu verzichten. Es wird dabei darauf hingewiesen, dass diese Nut 10 in Fig. 2a umlaufend ausgeführt ist, es ist jedoch auch möglich, eine teilweise unterbrochene Nut vorzusehen. Durch diese Nut 10 kann erreicht werden, dass im Rahmen des Herstellungsverfahrens der verschlußsensible Bereich des Gewindes nicht berührt und insbesondere nicht radial von außen berührt wird, und damit Verformungen dieses Bereiches vermieden werden. Es wird darauf hingewiesen, dass sich grundsätzlich jedes gängige Behältnis und insbesondere jedes gängige Mundstück durch das erfindungsgemäße Prinzip modifizieren lässt. Dies bedeutet, dass auch auf das erfindungsgemäße Behältnis die frei am Markt verfügbaren Schraubverschlüsse angebracht werden können.

Fig. 2b zeigt eine Draufsicht auf das in Fig. 2a gezeigte Behältnis. Man erkennt hier deutlich die Nut 10, die zwischen dem Sicherungsring 6 und dem Gewinde 4 angeordnet ist. Das Gewinde 4 ist jedoch hier nur schematisch dargestellt. Bei einer verschlossenen Flasche wird auch der Sicherungsring 6 durch den entsprechenden Verschluß abgedeckt.

Bei der in Fig. 2c gezeigten Darstellung bezieht sich das Bezugszeichen 12 auf eine Innenwandung des Behältnisses. Der Grundkörper 2 wird, wie oben erwähnt, im Rahmen des Herstellungsverfahrens expandiert.

Fig. 2d zeigt eine detaillierte Ansicht des in Fig. 2c gezeigten Bereiches A. Man erkennt hier, dass die Nut 10 gegenüber dem Sicherungsring 6 und dem Gewinde 4 ausgebildet ist. Dieser Sicherungsring 6 weist einen oberen radial nach außen verlaufenden Abschnitt 6a, einen unteren radial nach außen verlaufenden Abschnitt 6c sowie einen schräg verlaufenden Abschnitt 6b auf. Der radial nach außen verlaufende Abschnitt 6a stellt gleichzeitig auch eine Begrenzungswand 10a der Nut 10 dar. Das bedeutet, dass die Tiefe T dieser Nut 10 durch die Länge dieses geradlinig verlaufenden Abschnitts 6a bestimmt wird. Eine weitere Begrenzungswand 10c wird durch eine Unterseite 4c des Gewindes bestimmt. Zum Transport der Behältnisse kann eine Greifeinrichtung in diese Nut 10 eingreifen und damit wird ein direkter Kontakt mit dem Gewindegang 4b verhindert. Das Bezugszeichen 4a zeigt einen Gewindekern. Die Höhe H der Nut 10 reicht damit bei der in Fig. 2d gezeigten Ausführungsform von dem Ende des Gewindes 4 bis zu dem Sicherungsring 6. Dies ist gleichzeitig auch die maximale Höhe H dieser Nut 10. Die Begrenzungswand 10b der Nut verläuft im Wesentlichen in der Längsrichtung L des Behältnisses 1.

Das Bezugszeichen 14 bezieht sich auf einen schrägen Abschnitt der Behältnisinnenwandung 12. Genauer gesagt wird in demjenigen Bereich, in dem die Nut 10 vorgesehen ist, der Behältnisinnendurchmesser verringert, um in allen Bereichen des Behältnisses 1 eine ausreichende Wanddicke zur Verfügung zu haben. Der schräge Abschnitt 14 könnte jedoch in der Längsrichtung L des Behältnisses 1 auch geringfügig nach oben oder unten versetzt sein. Die Wanddicke des Behältnisses 1 unterhalb des Sicherungsrings 6 liegt bevorzugt zwischen 1,5 mm und 5 mm, bevorzugt zwischen 2 mm und 4 mm und besonders bevorzugt bei ca. 3 mm. Durch den erwähnten schrägen Abschnitt 14 wird erreicht, dass die Wanddicke auch in den dünnsten Bereichen wenigstens 1 mm, bevorzugt wenigstens 1,5 mm und besonders bevorzugt wenigstens 2 mm beträgt. Die Nut 10 ist damit insbesondere auch gegenüber dem Kern 4a des Gewindes 4 ausgebildet.

Die Tiefe T der umlaufenden Nut orientiert sich an dem minimalen Mundstücksinnendurchmesser, den man bereit ist zu akzeptieren. Die Nut 10 sollte insbesondere so groß bzw. so tief gewählt werden, dass eine sichere Funktion der verwendeten Klammersysteme gewährleistet ist. Durch das erfindungsgemäße Weglassen des Tragrings kann in Einzelfällen das Problem auftreten, dass auch kein Tragring mehr vorhanden ist, der das Sicherungsband eines Flaschenverschlusses vor Untergreifen schützt. Auf diese Weise könnten Manipulationen an diesem Sicherheitsband erleichtert werden. Um diese Sicherheit weiterhin beizubehalten, wäre es möglich, das verschlossene Mundstück anzusleeven bzw. mit einer Hülle an dem Behältnis anzuordnen. Genauer könnte eine Schrumpfhülle über dem Verschluss bzw. dem Kopf der Flasche angeordnet sein.

Das Bezugszeichen Q_{G} bezieht sich auf den Außendurchmesser bzw. den Außenquerschnitt des Gewindes 4, das Bezugszeichen Q_{S} auf den Außendurchmesser bzw. den Außenquerschnitt des Sicherungsrings 6 und das Bezugszeichen Q_{N} auf Außendurchmesser bzw. den Außenquerschnitt der Nut 10. Man erkennt, dass der Außenquerschnitt Q_{N} der Nut 10 geringer ist, als die Außenquerschnitte Q_{G} und Q_{S} des Gewindes 4 bzw. des Sicherungsrings 6.

Bei einem erfindungsgemäßen Verfahren zum Transport des in den Fig. 2a bis 2d gezeigten Behältnisses greift eine erste Greifeinrichtung unterhalb des Sicherungsrings 6 ein und kann das Behältnis beispielsweise an eine weitere Greifeinrichtung übergeben, die in die Nut 10 eingreift. Eine erfindungsgemäße Vorrichtung zum Transportieren von derartigen Behältnissen kann beispielsweise in Blasmaschinen, Etikettiermaschinen, Füllmaschinen, Heizeinrichtungen für die Behältnisse und dergleichen Anwendung finden. Wie in Fig. 2c gezeigt, weist auch der Grundkörper einen sich verjüngenden Bereich 16 auf. Diese Verjüngung kann bei dem erfindungsgemäßen Behältnis 1 geringer ausgeführt werden als bei Behältnissen nach dem Stand der Technik, da bereits in dem oberen Abschnitt 14 eine Verjüngung stattfindet. Vorzugsweise verjüngt sich das Behältnis in dem Abschnitt 16 um zwischen 1,5 und 3,0 mm, bevorzugt zwischen 2,0 und 2,7 mm.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Behältnis (1) mit einem Grundkörper (2), einem Außengewinde (4) und mit einem wenigstens abschnittsweise umlaufenden Sicherungsring (6), der sich bezüglich des Grundkörpers (2) des Behältnisses (1) nach außen erstreckt, wobei der umlaufende Sicherungsring (6) in einer Längsrichtung (L) des Behältnisses (1) zwischen dem Außengewinde (4) und dem Grundkörper (2) angeordnet und in der Längsrichtung (L) des Behältnisses (1) von dem Außengewinde (4) beabstandet ist,
**dadurch gekennzeichnet, dass** das Behältnis (1) zwischen dem Außengewinde (4) und dem umlaufenden Sicherungsring (6) eine wenigstens abschnittsweise umlaufende Nut (10) aufweist, wobei diese Nut (10) einen geringeren Außenquerschnitt als der Sicherungsring (6) und einen geringeren Außenquerschnitt als ein Außengewindekern (4a) aufweist und zumindest in demjenigen Bereich, in dem die Nut (10) vorgesehen ist, der Bshältnisinnendurchmesser verringert ist, wobei die Innenwandung (12) des Behältnisses (1) oberhalb des umlaufenden Sicherungsrings (6) einen sich in Richtung des Außengewindss (4) konisch erweiternden Abschnitt (14) aufweist, und wobei das Behältnis (1) aus einem Kunststoff hergestellt ist.

2. Behältnis (1) nach Anspruch 1,
**dadurch gekennzeichnet, dass** unterhalb des Außengewindes (4) neben dem Sicherungsring (6) kein weiterer Ring vorhanden ist.

3. Behältnis (1) nach Anspruch 1,
**dadurch gekennzeichnet, dass** sich die umlaufende Nut (10) in der Längsrichtung (L) unmittelbar an den umlaufenden Sicherungsring (6) anschließt.

4. Behältnis (1) nach Anspruch 1,
**dadurch gekennzeichnet, dass** die Nut (10) wenigstens abschnittsweise geradlinig verlaufende Begrenzungswände (10a, 10b, 10c) aufweist.

5. Behältnis (1) nach Anspruch 1,
**dadurch gekennzeichnet, dass** die Höhe (H) der Nut (10) in der Längsrichtung (L) des Behältnisses (1) und die Länge des umlaufenden Sicherungsrings (6) in der Längsrichtung (L) des Behältnisses (1) um nicht mehr als 100%, bevorzugt um nicht mehr als 50%, bevorzugt um nicht mehr als 25% und besonders bevorzugt um nicht mehr als 10% voneinander abweichen.

6. Behältnis (1) nach Anspruch 1,
**dadurch gekennzeichnet, dass** der umlaufende Sicherungsring (6) einen sich geradlinig radial nach aussen erstreckenden Abschnitt (6a) und einen schräg in der Längsrichtung (L) des Behältnisses (1) nach unten verlaufenden Abschnitt (6b) aufweist.

7. Behältnis (1) nach Anspruch 6,
**dadurch gekennzeichnet, dass** die Länge des ersten Abschnitts (6a) und die Tiefe (T) der Nut um nicht mehr als 50%, bevorzugt um nicht mehr als 25%, bevorzugt um nicht mehr als 10% und besonders bevorzugt um nicht mehr als 5% voneinander abweichen.

8. Behältnis (1) nach wenigstens einem der vorangegangenen Ansprüche,
**dadurch gekennzeichnet, dass** der Grundkörper (2) einen sich in der Längsrichtung (L) des Behältnisses (1) in Richtung des umlaufenden Sicherungsrings (6) wenigstens abschnittsweise erweiternden Querschnitt aufweist.

9. Behältnis (1) nach wenigstens einem der vorangegangenen Ansprüche, **dadurch gekennzeichnet, dass** das Behältnis (1) ein expandierbares Behältnis (1) ist.

10. Behältnis (1) nach wenigstens einem der vorangegangenen Ansprüche, **dadurch gekennzeichnet, dass** es zwei- oder mehrteilig ausgebildet ist.

11. Verfahren zum Transportieren eines Behältnisses (1) nach wenigstens einem der vorangegangenen Ansprüche, wobei das Behältnis (1) durch eine erste Greifeinrichtung unterhalb des Sicherungsrings (6) gegriffen wird und von einer zweiten Greifeinrichtung wenigstens teilweise an der wenigstens abschnittsweise umlaufenden Nut (10) gegriffen wird.

## Claims

1. Container (1) comprising a base body (2), an external thread (4) and an at least partially circumferential securing ring (6) which extends outwards relative to the base body (2) of the container (1), wherein the circumferential securing ring (6) is arranged between the thread (4) and the base body (2) in a longitudinal direction (L) of the container (1) and is spaced apart from the thread (4) in the longitudinal direction (L) of the container (1), **characterised in that** the container (1) comprises an at least partially circumferential groove (10) between the thread (4) and the circumferential securing ring (6), wherein this groove (10) has a smaller external cross-section than the securing ring (6) and a smaller external cross-section than a thread core (4a) and the inner container diameter is reduced at least in the region, where the groove (10) is provided, wherein the inner wall (12) of the container (1) has above the circumferential securing ring (6) a section (14) which widens conically towards the thread (4), and wherein the container (1) is made from a plastic.

2. Container (1) according to claim 1, **characterised in that**, besides the securing ring (6), no further ring exists below the external thread (4).

3. Container (1) according to claim 1, **characterised in that** the circumferential groove (10) directly adjoins the circumferential securing ring (6) in the longitudinal direction (L).

4. Container (1) according to claim 1, **characterised in that** the groove (10) has boundary walls (10a, IOb, 10c) which run at least partially in a straight line.

5. Container (1) according to claim 1, **characterised in that** the height (H) of the groove (10) in the longitudinal direction (L) of the container (1) and the length of the circumferential securing ring (6) in the longitudinal direction (L) of the container (1) differ from one another by no more than 100%, preferably by no more than 50%, preferably by no more than 25% and particularly preferably by no more than 10%.

6. Container (1) according to claim 1, **characterised in that** the circumferential securing ring (6) comprises a section (6a) extending radially outwards in a straight line and a section (6b) running obliquely downwards in the longitudinal direction (L) of the container (1).

7. Container (1) according to claim 6, **characterised in that** the length of the first section (6a) and the depth (T) of the groove differ from one another by no more than 50%, preferably by no more than 25%, preferably by no more than 10% and particularly preferably by no more than 5%.

8. Container (1) according to at least one of the preceding claims, **characterised in that** the base body (2) has a cross-section which widens at least partially towards the circumferential securing ring (6) in the longitudinal direction (L) of the container (1).

9. Container (1) according to at least one of the preceding claims, **characterised in that** the container (1) is an expandable container (1).

10. Container (1) according to at least one of the preceding claims, **characterised in that** it is formed in two or more parts.

11. Method for transporting a container (1) according to at least one of the preceding claims, wherein the container (1) is gripped below the securing ring (6) by a first gripping device and is gripped by a second gripping device at least partially at the at least partially circumferential groove (10).

## Revendications

1. Récipient (1), comportant un corps de base (2) et un filetage extérieur (4), avec une bague de fixation (6) au moins partiellement circonférentielle, qui s'étend vers l'extérieur par rapport au corps de base (2) du récipient (1), la bague de fixation (6) circonférentielle étant disposée entre le filetage (4) et le corps de base (2) dans une direction longitudinale (L) du récipient (1) et espacée du filetage (4) dans la direction longitudinale (L) du récipient (1), **caractérisé en ce que** le récipient (1) est pourvu d'une rainure (10) au moins partiellement circonférentielle entre le filetage (4) et la bague de fixation (6) circonférentielle, ladite rainure (10) présentant une section transversale extérieure inférieure à celle de la bague de fixation (6) et une section transversale extérieure inférieure à celle d'un base du filetage (4a), le diamètre intérieur du récipient étant réduit au moins dans la région dans laquelle la rainure (10) est prévue, la paroi intérieure (12) du récipient (1) présentant un segment (14) qui s'élargit coniquement vers le filetage (4) au-dessus de la bague de fixation (6) circonférentielle, et le récipient (1) étant fabriqué en matière plastique.

2. Récipient (1) selon la revendication 1, **caractérisé en ce que** aucune autre bague n'est présentée à côté de la bague de fixation (6) en dessous du filetage (4).

3. Récipient (1) selon la revendication 1, **caractérisé en ce que** la rainure (10) circonférentielle est immédiatement adjacente à la bague de fixation (6) circonférentielle dans la direction longitudinale (L).

4. Récipient (1) selon la revendication 1, **caractérisé en ce que** la rainure (10) présente des parois de délimitation (10a, 10b, 10c) s'étendant au moins partiellement en ligne droite.

5. Récipient (1) selon la revendication 1, **caractérisé en ce que** la hauteur (H) de la rainure (10) dans la direction longitudinale (L) du récipient (1) et la longueur de la bague de fixation (6) circonférentielle dans la direction longitudinale (L) du récipient (1) ne diffèrent pas plus de 100 % entre elles, avantageusement pas plus de 50 %, de préférence pas plus de 25 %, et tout particulièrement pas plus de 10 %.

6. Récipient (1) selon la revendication 1, **caractérisé en ce que** la bague de fixation (6) circonférentielle présente un segment (6a) s'étendant radialement en ligne droite vers l'extérieur et un segment (6b) s'étendant obliquement vers le bas dans la direction longitudinale (L) du récipient (1).

7. Récipient (1) selon la revendication 6, **caractérisé en ce que** la longueur du premier segment (6a) et la profondeur (T) de la rainure ne diffèrent pas plus de 50 % entre elles, avantageusement pas plus de 25 %, de préférence pas plus de 10 % et tout particulièrement pas plus de 5%.

8. Récipient (1) selon au moins une des revendications précédentes, **caractérisé en ce que** le corps de base (2) présente une section transversale qui s'élargit au moins partiellement vers la bague de fixation (6) circonférentielle dans la direction longitudinale (L) du récipient (1).

9. Récipient (1) selon au moins une des revendications précédentes, **caractérisé en ce que** le récipient (1) est un récipient (1) expansible.

10. Récipient (1) selon au moins une des revendications précédentes, **caractérisé en ce que** celui-ci est réalisé en deux ou en plusieurs parties.

11. Procédé de transport d'un récipient (1) selon au moins une des revendications précédentes, ledit récipient (1) étant saisi en dessous de la bague de fixation (6) par un premier dispositif de saisie et au moins partiellement sur la rainure (10) au moins partiellement circonférentielle par un deuxième dispositif de saisie.
